# EUROPEAN PATENT APPLICATION

(11) **EP 3 483 971 A1**
(43) Date of publication of application: **15.05.2019**
(21) Application number: 17886961.6
(22) Date of filing: 25.12.2017
(51) Int. Cl.: H01M 10/0562, H01M 4/133, H01M 4/1393, H01M 4/36, H01M 4/587, H01M 4/62, H01M 10/0525

(54) **ALL-SOLID-STATE LITHIUM ION BATTERY**

(30) Priority: 26.12.2016 JP 2016250531
(71) Applicant: Showa Denko K.K., Tokyo 105-8518 (JP)
(72) Inventor: SOTOWA Chiaki, Tokyo 105-8518 (JP); TAKEUCHI Masataka, Tokyo 105-8518 (JP)
(74) Representative: Strehl Schübel-Hopf & Partner
(86) International application number: PCT/JP2017/046422
(87) International publication number: WO 2018/123967

(57) **Abstract**

The present invention relates to an all-solid-state lithium ion battery, including a solid electrolyte, a negative electrode, and a positive electrode,
wherein the solid electrolyte includes at least one kind selected from the group consisting of oxide-based solid electrolytes and sulfide-based solid electrolytes, and has a 50% diameter (D50) in a cumulative particle diameter distribution on a volume basis of from 0.1 µm to 10 µm,
wherein the negative electrode includes the solid electrolyte, a negative electrode active material, and a conductive additive,
wherein the negative electrode active material includes graphite particles each having an interlayer spacing d002 of a graphite crystal of from 0.3360 nm to 0.3370 nm and having a D50 of from 1 µm to 10 µm, and
wherein the negative electrode includes 35 parts by mass to 45 parts by mass of the negative electrode active material, 45 parts by mass to 55 parts by mass of the solid electrolyte, and 5 parts by mass to 10 parts by mass of the conductive additive. The present invention enables achievement of an all-solid-state lithium ion battery, in which a contact area between the solid electrolyte and the negative electrode active material is increased, and thus a lithium ion intercalation/deintercalation reaction is improved, and which has high safety, a low resistance, and a long cycle lifetime.

## Description

### Technical Field

The present invention relates to an all-solid-state lithium ion battery free of a liquid electrolyte.

### Background Art

A lithium ion battery has been widely used because of having a high voltage and a high energy density. As one method of improving safety of the lithium ion battery, an all-solid-state lithium ion battery using a solid electrolyte, which is non-combustible and free of liquid leakage, instead of an organic liquid electrolyte has been actively investigated.

For example, many investigations have been made into an all-solid-state lithium ion battery using a polymer solid electrolyte, such as a polyethylene oxide/Li salt compound, from old times. However, there are problems in that the ion conductivity of the polymer solid electrolyte at room temperature is 1/100 or less of that of a liquid electrolyte, and hence a current which can be taken out at room temperature or low temperature is small, a side reaction with a graphite negative electrode is liable to occur under a charged state, and further, a resistance at an interface is increased.

In addition, investigations have also been made into an all-solid-state lithium ion battery using an inorganic ceramics-based lithium ion conductor as the solid electrolyte from old times.

In recent years, investigations have been actively made into a sulfide-based solid electrolyte, mainly glass, exhibiting a high lithium ion conductivity. Glass exhibiting a lithium ion conductivity of 10⁻³ Scm⁻¹ or more even at normal temperature has been developed.

Patent Literatures 1 to 4 disclose that a metal-based material such as In, Al, Si, or Sn, a ceramics-based material such as Li₄Ti₅O₁₂, a carbon-based material such as graphite, mesocarbon microbeads (MCMB), highly oriented pyrolytic graphite (HOPG), hard carbon, or soft carbon, and a material obtained by coating surfaces of particles with carbon layers can each be used as a negative electrode active material.

### Citation List

### Patent Literature

[PTL 1] JP 2011-181260 A
[PTL 2] JP 2013-16423 A (US 9172113 B2 and US 9484597 B2)
[PTL 3] JP 2013-41749 A
[PTL 4] JP 2015-191864 A (US 2017/0237115 A1)

### Summary of Invention

### Technical Problem

While research and development has been actively made into the solid electrolyte of the all-solid-state lithium ion battery, it has been disclosed that a material having been used in a related-art lithium ion secondary battery using a liquid electrolyte is used as the negative electrode active material.

However, in the case of a negative electrode material formed of the metal-based material, lithium is liable to be precipitated in association with a charge/discharge reaction. Further, indium is a rare metal and has a high price. Lithium titanate (Li₄Ti₅O₁₂) provides a battery having a long charge/discharge cycle lifetime, but the battery has a low voltage and a low capacity.

When a graphite-based material, a carbon-based material, or a Si-based material is used as the negative electrode active material, a potential on a negative electrode side is reduced to about 0 V using Li as a reference. When the potential on the negative electrode side is reduced to lower than 0.3 V, there is a problem in that the solid electrolyte is destabilized. No conventional solid electrolyte has been stable to a low potential, and hence sufficient investigations have not been made into optimization of the graphite-based or carbon-based negative electrode active material to be combined with the solid electrolyte.

In addition, the Si-based material exhibits remarkable volume expansion in association with charge/discharge, and hence there is another problem of a rapid reduction in capacity.

Patent Literature 4 discloses that two or more kinds of materials are mixed and used as the negative electrode active material. However, no investigation has been made into optimal particle size of a solid electrolyte to be used, the physical properties of the materials, and the like. There is room for further improvement and investigation.

### Solution to Problem

According to embodiments of the present invention, there are provided an all-solid-state lithium ion battery and an electrode mixture described below.
[1] An all-solid-state lithium ion battery, including a solid electrolyte, a negative electrode, and a positive electrode,
   wherein the solid electrolyte is at least one kind selected from the group consisting of oxide-based solid electrolytes and sulfide-based solid electrolytes, and has a 50% diameter (D50) in a cumulative particle diameter distribution on a volume basis of from 0.1 µm to 10 µm,
   wherein the negative electrode includes the solid electrolyte, a negative electrode active material, and a conductive additive,
   wherein the negative electrode active material includes graphite particles each having an interlayer spacing d002 of a graphite crystal of from 0.3360 nm to 0.3370 nm and having a D50 of from 1 µm to 10 µm, and
   wherein the negative electrode includes 35 parts by mass to 45 parts by mass of the negative electrode active material, 45 parts by mass to 55 parts by mass of the solid electrolyte, and 5 parts by mass to 10 parts by mass of the conductive additive.
[2] The all-solid-state lithium ion battery according to [1] above, wherein a difference between the D50 of the graphite particles and the D50 of the solid electrolyte is 5 µm or less.
[3] The all-solid-state lithium ion battery according to [1] or [2] above, wherein the graphite particles each have a BET specific surface area of from 2 m²/g to 10 m²/g.
[4] The all-solid-state lithium ion battery according to any one of [1] to [3] above, wherein surfaces of the graphite particles are coated with low crystalline carbon.
[5] The all-solid-state lithium ion battery according to any one of [1] to [4] above, wherein the graphite particles each have an R value (R=I_{D/}I_{G}) of 0.10 or more, which is represented by a ratio between a peak intensity (I_{D}) in a region of from 1,300 cm⁻¹ to 1,400 cm⁻¹ and a peak intensity (I_{G}) in a region of from 1,580 cm⁻¹ to 1,620 cm⁻¹, the peak intensities each being measured by Raman spectroscopy.
[6] The all-solid-state lithium ion battery according to any one of [1] to [5] above, wherein the graphite particles each have a ratio of a peak intensity of a (110) plane to a peak intensity of a (004) plane of from 0.2 to 0.8, the peak intensities each being measured by powder X-ray diffractometry.
[7] The all-solid-state lithium ion battery according to any one of [1] to [6] above, wherein the solid electrolyte is at least one kind selected from the group consisting of sulfide-based solid electrolytes.
[8] The all-solid-state lithium ion battery according to any one of [1] to [7] above, wherein the conductive additive is particulate carbon, fibrous carbon, or a combination thereof.
[9] An electrode mixture, including a solid electrolyte, a negative electrode active material, and a conductive additive,
   wherein the solid electrolyte is at least one kind selected from the group consisting of oxide-based solid electrolytes and sulfide-based solid electrolytes, and has a 50% diameter (D50) in a cumulative particle diameter distribution on a volume basis of from 0.1 µm to 10 µm,
   wherein the negative electrode active material is graphite particles each having an interlayer spacing d002 of a graphite crystal of from 0.3360 nm to 0.3370 nm and having a D50 of from 1 µm to 10 µm, and
   wherein the electrode mixture includes 35 parts by mass to 45 parts by mass of the negative electrode active material, 45 parts by mass to 55 parts by mass of the solid electrolyte, and 5 parts by mass to 10 parts by mass of the conductive additive.

### Advantageous Effects of Invention

When values for the powder physical properties of the solid electrolyte and values for the powder physical properties and crystal structure of the negative electrode active material are controlled to fall within specified ranges, a contact area between the solid electrolyte and the negative electrode active material is increased, and thus a lithium ion intercalation/deintercalation reaction can be improved. As a result, the all-solid-state lithium ion battery which has high safety as a battery, a low resistance, and a long cycle lifetime can be achieved.

### Description of Embodiments

An all-solid-state lithium ion battery according to one embodiment of the present invention includes a solid electrolyte, a negative electrode, and a positive electrode.

### [Negative Electrode]

In one embodiment of the present invention, the negative electrode includes a solid electrolyte, a negative electrode active material, and a conductive additive. The negative electrode active material includes graphite particles.

In one embodiment of the present invention, the graphite particles have a D50, which is a 50% diameter in a cumulative particle diameter distribution on a volume basis, of from 1 µm to 10 µm, preferably from 2 µm to 7 µm, more preferably from 3 µm to 6 µm. When the graphite particles have a D50 falling within the above-mentioned range, satisfactory contact between solid electrolyte particles and the negative electrode active material is achieved, resulting in a reduction in resistance and an improvement in charge/discharge rate characteristics. When the graphite particles have a D50 of less than 1 µm, there is a tendency that a side reaction is promoted on the surface of the active material.

The cumulative particle diameter distribution on a volume basis may be measured with a laser diffraction particle size distribution measuring apparatus. For example, Mastersizer (trademark) manufactured by Malvern Panalytical Ltd. may be used.

In one embodiment of the present invention, the sizes of the graphite particles are reduced to a level comparable to the sizes of the solid electrolyte particles. Thus, contact points between the solid electrolyte particles and the graphite particles are increased.

In one embodiment of the present invention, the D50 of the graphite particles and the D50 of the solid electrolyte are adjusted so as to be almost comparable to each other. A difference between the D50 of the graphite particles and the D50 of the solid electrolyte is set to preferably 5 µm or less, more preferably 3 µm or less.

In order to ensure more contact points between the negative electrode active material and the solid electrolyte, a soft material may be used because the negative electrode active material can deform during compression molding of an electrode and can be brought into surface contact with the solid electrolyte. However, when a relatively hard material is used and subjected to particle size adjustment, battery characteristics are further improved.

In one embodiment of the present invention, relatively hard graphite particles are used as the negative electrode active material. When the relatively hard graphite particles are used, an orientation index is increased. The orientation index is evaluated using a ratio I(110)/I(004) between a peak intensity of a (110) plane of graphite and a peak intensity of a (004) plane of graphite each measured by powder X-ray diffractometry. When the relatively hard graphite particles are used, the ratio I(110)/I(004) is 0.2 or more and 0.8 or less. The ratio I(110)/I(004) is more preferably 0.3 or more and 0.8 or less, still more preferably 0.4 or more and 0.8 or less.

The relatively hard graphite particles each have a relatively high orientation index and low crystal orientation. When the graphite particles each have low crystal orientation, there is an advantage in that a lithium ion intercalation/deintercalation reaction occurs on the surfaces of the graphite particles, and hence a reaction resistance is reduced.

When the ratio I(110)/I(004) is less than 0.2, there is a tendency that the crystal orientation is increased, and a battery internal resistance is increased. Meanwhile, when the ratio I(110)/I(004) exceeds 0.8, there is a tendency that the graphitic crystallinity of the graphite particles is reduced, and hence a battery capacity is reduced.

However, graphite particles each having a ratio I(110)/I(004) of less than 0.2 may be blended in the negative electrode active material. A blending amount of such graphite particles is preferably from 1 part by mass to 10 parts by mass, more preferably from 1 part by mass to 5 parts by mass with respect to 100 parts by mass of the negative electrode active material. When such graphite particles, which are soft, are used as the negative electrode active material by being mixed with the relatively hard graphite particles, the soft graphite particles advantageously aid in ensuring the contact points between the solid electrolyte particles and the graphite particles serving as the negative electrode active material during press molding of the negative electrode.

In one embodiment of the present invention, the graphite particles to be used each have an interlayer spacing d002 of a graphite crystal of from 0.3360 nm to 0.3370 nm. The interlayer spacing d002 of a graphite crystal may be measured by powder X-ray diffractometry (XRD) according to any known method (see Tokiti Noda, Michio Inagaki, Japan Society for The Promotion of Science, Material of The 117th Committee, 117-71-A-1 (1963); Michio Inagaki et al., Japan Society for The Promotion of Science, Material of The 117th Committee, 117-121-C-5 (1972); Michio Inagaki, "Carbon", 1963, No. 36, pp. 25-34; and Iwashita et al., Carbon vol. 42 (2004), pp. 701-714) .

In one embodiment of the present invention, the graphite particles preferably have a low crystallinity on surfaces thereof. Raman scattering spectroscopy may be used as a method of evaluating the crystallinity of the graphite particles on the surfaces thereof. The crystallinity is evaluated as being high when an R value, which is an intensity ratio I_{D}/I_{G} between a peak intensity (I_{D}) in a region of from 1,300 cm⁻¹ to 1,400 cm⁻¹ in a spectrum measured by Raman spectroscopy and a peak intensity (I_{G}) in a region of from 1, 580 cm⁻¹ to 1, 620 cm⁻¹ in the spectrum, is small, and the crystallinity is evaluated as being low when the R value is large.

In one embodiment of the present invention, the graphite particles each have an R value on the surfaces thereof of preferably 0.1 or more, more preferably 0.15 or more, still more preferably 0.2 or more.

The measurement by Raman spectroscopy may involve the use of, for example, JASCO NRS-3100 manufactured by JASCO Corporation.

In one embodiment of the present invention, by allowing the graphite particles to have different crystallinities in an inside thereof and in a surface layer thereof, the battery characteristics can be further improved.

In this case, the graphite particles each have an R value of 0.01 or more and 0.1 or less, and by reducing the crystallinity of the surface thereof, the graphite particles each have different crystallinities in the inside thereof and in the surface layer thereof. The graphite particles each have an R value in the surface layer thereof of preferably 0.1 or more, more preferably 0.15 or more, still more preferably 0.2 or more.

In one embodiment of the present invention, the graphite particles are in a state in which the surfaces thereof are coated with low crystalline carbon.

### Crystallinity Reducing Method-1:

As a crystallinity reducing method for the surfaces of the graphite particles, there is given a method involving causing an organic compound to adhere to the surfaces of the graphite particles, and subjecting the resultant to heat treatment in a temperature range of from 100°C to 300°C, and then to firing in a temperature range of from 900°C to 1,500°C under an inert atmosphere.

The organic compound is not particularly limited, but a petroleum-based pitch, a coal-based pitch, a phenol resin, a polyvinyl alcohol resin, a furan resin, a cellulose resin, a polystyrene resin, a polyimide resin, and an epoxy resin may be used.

A possible procedure involves mixing the organic compound with a solvent to obtain a liquid, mixing and kneading the liquid and the graphite particles, and then volatilizing the solvent, followed by subjecting the resultant to heat treatment, to thereby allow the surfaces of the graphite particles to be coated with low crystalline carbon layers. In addition, it is also appropriate to adopt a method involving simply mixing the organic compound in powder form and the graphite particles in powder form with each other, and subjecting the resultant to heat treatment.

### Crystallinity Reducing Method-2:

As a crystallinity reducing method for the surfaces of the graphite particles, there is also given, as an example, a method involving performing mechanical treatment to roughen a surface crystal. A treatment device is not particularly limited, but examples thereof include Mechano Fusion (trademark) (manufactured by Hosokawa Micron Corporation), Faculty (trademark) (manufactured by Hosokawa Micron Corporation), and Hybridizer (trademark) (manufactured by Nara Machinery Co., Ltd.).

In addition, a device generally used for the purpose of pulverization may also be used through adjustment of conditions. A usable device is not particularly limited, but examples thereof include ACM Pulverizer (manufactured by Hosokawa Micron Corporation), Turbo Mill (manufactured by Matsubo Corporation), and Jet Mill (manufactured by Seishin Enterprise Co., Ltd.), and as well, a rod mill and a ball mill each using a medium.

When the graphite particles serving as the negative electrode active material each have an inner crystal structure having low orientation, there is an advantage in that a lithium ion can be accepted and released in various directions. In addition, when the inner crystal structure of each of the graphite particles is combined with a low crystalline structure on the surface of each of the graphite particles, an effect of increasing a ratio of an available battery capacity at a large current is achieved.

In one embodiment of the present invention, the graphite particles each have a BET specific surface area of preferably from 1 m²/g to 10 m²/g, more preferably from 2 m²/g to 8 m²/g, still more preferably 2 m²/g to 7 m²/g. When the specific surface area is too large, the side reaction is promoted. In addition, when the specific surface area is too small, there is a tendency that their contact areas with the solid electrolyte particles are reduced, and hence sufficient battery characteristics are not obtained.

The BET specific surface area may be calculated based on a nitrogen gas adsorption/desorption amount. For example, NOVA-1200 (manufactured by Yuasa Ionics) may be used.

In one embodiment of the present invention, the negative electrode includes 35 parts by mass to 45 parts by mass of the negative electrode active material, 45 parts by mass to 55 parts by mass of the solid electrolyte, and 5 parts by mass to 10 parts by mass of the conductive additive. When the all-solid-state lithium ion battery uses the negative electrode having such blending ratio, the all-solid-state lithium ion battery is further improved in discharge capacity, charge/discharge rate characteristics, and cycle characteristics.

### [Conductive Additive]

As the conductive additive, a carbon material is preferably used. The carbon material is not particularly limited, but particulate carbon, such as Denka Black (trademark) (manufactured by Denka Company Limited), Ketjen Black (trademark) (manufactured by Lion Corporation), fine graphite powder SFG series (manufactured by TIMCAL), or graphene, may be used.

In addition, fibrous carbon, such as vapor grown carbon fiber "VGCF (trademark)" series (manufactured by Showa Denko K.K.), a carbon nanotube, or a carbon nanohorn, may also be used. Those conductive additives may be used alone or in combination thereof. As the conductive additives, either of the particulate carbons, the fibrous carbons, or a combination thereof may be used.

### [Solid Electrolyte]

In one embodiment of the present invention, the solid electrolyte has a D50, which is a 50% diameter in a cumulative particle diameter distribution on a volume basis, of from 0.1 µm to 10 µm. The solid electrolyte has a D50 of preferably from 1 µm to 10 µm, more preferably from 5 µm to 10 µm. When the solid electrolyte has a D50 falling within the above-mentioned range, satisfactory contact between the solid electrolyte particles and the negative electrode active material can be maintained, resulting in a reduction in resistance of the electrode and an improvement in charge/discharge rate characteristics.

The cumulative particle diameter distribution on a volume basis may be measured with a laser diffraction particle size distribution measuring apparatus. For example, Mastersizer (trademark) manufactured by Malvern Panalytical Ltd. may be used.

In the present invention, the values for the powder physical properties of the solid electrolyte and the values for the powder physical properties and crystal structure of the negative electrode active material are controlled to fall within specified ranges. Thus, a contact area between the solid electrolyte and the negative electrode active material is increased, with the result that the lithium ion intercalation/deintercalation reaction can be improved. Accordingly, the kind of the solid electrolyte is not limited, and the effects of the present invention are exhibited through use of any known solid electrolyte.

In one embodiment of the present invention, for example, an oxide-based solid electrolyte or a sulfide-based solid electrolyte is used as the solid electrolyte.

Examples of the oxide-based solid electrolyte include a garnet-type complex oxide, a perovskite-type complex oxide, a LISICON-type complex oxide, a NASICON-type complex oxide, a Li-alumina-type complex oxide, LIPON, and an oxide glass. Of those oxide-based solid electrolytes, it is preferred to select an oxide-based solid electrolyte which can be used stably even at a low negative electrode potential. For example, La_{0.51}Li_{0.34}TiO_{2.94}, Li_{1.3}Al_{0.3}Ti_{1.7}(PO₄)₃, Li₇La₃Zr₂O₁₂, 50Li₄SiO₄·50Li₃BO₃, Li_{2.9}PO_{3.3}N_{0.46}, Li_{3.6}Si_{0.6}P_{0.4}O₄, Li_{1.07}Al_{0.69}Ti_{1.46}(PO₄)₃, and Li_{1.5}Al_{0.5}Ge_{1.5}(PO₄)₃ are suitable.

Examples of the sulfide-based solid electrolyte include a sulfide glass, a sulfide glass ceramic, and a Thio-LISICON-type sulfide. Of those sulfide-based solid electrolytes, it is preferred to select a sulfide-based solid electrolyte which can be used stably even at a low negative electrode potential. For example, Li₁₀GeP₂S₁₂, Li_{3.25}Ge_{0.25}P_{0.75}S₄, 30Li₂S·26B₂S₃·44LiI, 63Li₂S·36SiS₂·1Li₃PO₄, 57Li₂S·38SiS₂·5Li₄SiO₄, 70Li₂S·30P₂S₅, 50Li₂S·50GeS₂, Li₇P₃S₁₁, Li_{3.25}P_{0.95}S₄, Li₃PS₄, and Li₂S·P₂S₃·P₂S₅ are suitable.

When the solid electrolyte which can be used stably even at a low negative electrode potential is combined with the negative electrode active material of the present invention, the battery performance of the all-solid-state lithium ion battery is further improved. The above-mentioned solid electrolytes may be used alone or in combination thereof. In one embodiment of the present invention, the sulfide-based solid electrolyte is more preferably used as the solid electrolyte.

### [Electrode Mixture]

An electrode mixture according to one embodiment of the present invention includes 35 parts by mass to 45 parts by mass of the negative electrode active material, 45 parts by mass to 55 parts by mass of the solid electrolyte, and 5 parts by mass to 10 parts by mass of the conductive additive. When the negative electrode is produced through use of the electrode mixture having such blending ratio, a discharge capacity, charge/discharge rate characteristics, and cycle characteristics are further improved.

### [Positive Electrode]

Any known positive electrode active material may be adopted for the positive electrode. There may be used, for example: rock salt-type layered active materials, such as LiCoO₂, LiMnO₂, LiNiO₂, LiVO₂, and LiNi_{1/3}Mn_{1/3}Co_{1/3}O₂; spinel-type active materials, such as LiMn₂O₄; olivine-type active materials, such as LiFePO₄, LiMnPO₄, LiNiPO₄, and LiCuPO₄; and sulfide active materials, such as Li₂S.

The positive electrode active material has a D50 of preferably from 2 µm to 15 µm, more preferably from 3 µm to 10 µm. It is desired that also the particle size of the positive electrode active material be close to the particle size of the solid electrolyte.

### [Binder]

Any known binder may be used in order to maintain the shapes of the negative electrode and the positive electrode. There may be used, for example, polyvinylidene fluoride, polyurethane, polysiloxane, polytetrafluoroethylene, and polybutadiene.

### [Mechanical Milling]

Means for producing the solid electrolyte particles, and means for mixing particles of each of the active materials, the solid electrolyte particles, and the conductive additive are not particularly limited, but mechanical milling treatment using a planetary mill, a ball mill, a vibrating mill, or Mechano Fusion (trademark) or the like as well as homogenization using a mortar may be performed.

### [Current Collector]

As a current collector, an aluminum foil may be used for the positive electrode, and a nickel foil may be used for the negative electrode. A rolled foil or an electrolytic foil may be used as the current collector.

As the current collector, an aluminum foil coated with carbon and a nickel foil coated with carbon may be used. A carbon coating method is not particularly limited. Carbon contained in a carbon coating layer is not particularly limited, but acetylene black, Ketjen Black (trademark), a carbon nanotube, graphene, a vapor grown carbon fiber, fine artificial graphite powder, or the like may be used.

### Examples

The present invention is described more specifically by means of Examples and Comparative Examples below. These examples are merely illustrative, and by no means limit the present invention. Powder physical properties (D50 and BET specific surface area) and a crystal structure (d002, orientation index, and Raman R value) were evaluated by the following methods.

### [D50]

A D50 (µm), which was a 50% diameter in a cumulative particle diameter distribution on a volume basis, was measured with Mastersizer (trademark) manufactured by Malvern Panalytical Ltd. serving as a laser diffraction particle size distribution measuring apparatus and by a wet method involving using water as a solvent.

### [BET Specific Surface Area]

A BET specific surface area (m²/g) was calculated with NOVA-1200 (manufactured by Yuasa Ionics) and by a BET method based on a nitrogen gas adsorption/desorption amount.

### [d002]

An interlayer spacing d002 of a graphite crystal was calculated by powder X-ray diffractometry (XRD) according to methods described in: Japan Society for The Promotion of Science, Material of The 117th Committee, 117-71-A-1 (1963); Japan Society for The Promotion of Science, Material of The 117th Committee, 117-121-C-5 (1972); and Michio Inagaki, "Carbon", 1963, No. 36, pp. 25-34.

### [Orientation Index]

An orientation index was evaluated by powder X-ray diffractometry (XRD) and by calculating an intensity ratio I(110)/I(004) between a diffraction peak attributed to a (110) plane of graphite and a diffraction peak attributed to a (004) plane of graphite.

### [R Value]

Measurement by Raman spectroscopy was performed with JASCO NRS-3100 manufactured by JASCO Corporation under the conditions of an excitation wavelength of 532 nm, an entrance slit width of 200 µm, an exposure time period of 15 seconds, a cumulative number of 2, and a diffraction grating with 600 grooves/mm, and a peak intensity (I_{D}) in a region of from 1,300 cm⁻¹ to 1, 400 cm⁻¹ and a peak intensity (I_{G}) in a region of from 1, 580 cm⁻¹ to 1, 620 cm⁻¹ were determined. An R value (I_{D/}I_{G}) was calculated therefrom.

### Example 1:

### [Solid Electrolyte Layer]

Li₂S (manufactured by Nippon Chemical Industrial Co., Ltd.) and P₂S₅ (manufactured by Sigma-Aldrich Japan) each serving as a starting raw material were weighed out and mixed at a molar ratio of 75:25 under an argon atmosphere, and the mixture was subjected to mechanical milling (rotation number: 400 rpm) using a planetary ball mill (P-5 type, manufactured by Fritsch Japan Co., Ltd.) and zirconia balls (7 balls of 10 mmϕ and 10 balls of 3 mmϕ) for 20 hours. Thus, a Li₃PS₄ amorphous solid electrolyte having a D50 of 8 µm was obtained.

The resultant solid electrolyte was subjected to press molding with a uniaxial press molding machine using a die made of polyethylene having an inner diameter of 10 mmϕ and a punch made of SUS. Thus, a solid electrolyte layer to be used for a battery evaluation test was obtained.

### [Negative Electrode]

Petroleum-based coke was pulverized with Bantam mill (manufactured by Hosokawa Micron Corporation), and subjected to air classification with Turbo Classifier (manufactured by Nisshin Engineering Inc.). Thus, raw material powder having a D50 of 5 µm was obtained.

The raw material powder was subjected to heat treatment at 3,000°C for 10 minutes under an argon gas stream in an induction heating furnace. Thus, graphite particles A were obtained.

90 Parts by mass of the graphite particles A and 10 parts by mass of coal-based pitch were mixed with each other, and kneaded for 30 minutes while heat of 200°C was applied thereto.

After that, the resultant was subjected to firing treatment at 1,000°C for 1 hour under an argon gas stream, and was finally passed through a sieve having an opening of 45 µm. Thus, graphite particles B to be used as a negative electrode active material were obtained.

The graphite particles B each had a BET specific surface area of 3 m²/g and a Raman R value of 0.2. In addition, the orientation index and the d002 of the graphite particles B each measured and calculated by powder X-ray diffractometry were 0.4 and 0.3362 nm, respectively.

45 Parts by mass of the graphite particles B, 45 parts by mass of the solid electrolyte (Li₃PS₄, D50: 8 µm), and 10 parts by mass of Denka Black (trademark) (HS-100) serving as a conductive additive were mixed in a glove box with an argon gas atmosphere. Further, the mixture was homogenized through milling treatment at 100 rpm for 1 hour with a planetary ball mill, and was subjected to press molding at 400 MPa with a uniaxial press molding machine using a die made of polyethylene having an inner diameter of 10 mmϕ and a punch made of SUS. Thus, a negative electrode to be used for the battery evaluation test was obtained.

### [Positive Electrode]

55 Parts by mass of a positive electrode active material LiCoO₂ (Nippon Chemical Industrial Co., Ltd., D50: 10 µm), 40 parts by mass of the solid electrolyte (Li₃PS₄, D50: 8 µm), and 5 parts by mass of Denka Black (HS-100) were mixed. Further, the mixture was homogenized through milling treatment at 100 rpm for 1 hour with a planetary ball mill, and was subjected to press molding at 400 MPa with a uniaxial press molding machine using a die made of polyethylene having an inner diameter of 10 mmϕ and a punch made of SUS. Thus, a positive electrode to be used for the battery evaluation test was obtained.

### [Assembly of Battery]

The negative electrode, the solid electrolyte layer, and the positive electrode were laminated on one another in a die made of polyethylene having an inner diameter of 10 mmϕ, and were sandwiched from both sides by a punch made of SUS at a pressure of 100 MPa. Thus, a test battery having a designed capacity of 25 mAh was obtained.

### [Battery Evaluation]

As charge in the first cycle, constant current charge was performed at 1.25 mA (0.05 C) up to 4.2 V, and subsequently constant voltage charge was performed at a constant voltage of 4.2 V for 40 hours.

After that, constant current discharge was performed at 1.25 mA (0.05 C) until the voltage reached 2.75 V. A capacity in the first charge/discharge cycle was used as a discharge capacity.

A discharge capacity during discharge at 2.5 mA (0.1 C) was defined as 100%, and a ratio of a discharge capacity during discharge at 75 mA (3.0 C) was used as rate characteristics (%).

The discharge capacity in the first cycle measured at 25°C was defined as 100%, and a discharge capacity after 500 cycles was used as cycle characteristics (%). In the measurement of the cycle characteristics, as charge, constant current charge was performed at 5.0 mA (0.2 C) up to 4.2 V, and subsequently constant voltage charge was performed at a constant voltage of 4.2 V until the current was reduced to 0.05 C. In addition, as discharge, constant current discharge was performed at 25 mA (1.0 C) until the voltage reached 2.75 V. The evaluation results of the discharge capacity (mAh/g), rate characteristics (%), and cycle characteristics (%) of the battery are shown in Table 1.

### Example 2:

Petroleum-based coke was pulverized with Bantam mill (manufactured by Hosokawa Micron Corporation), and subjected to air classification with Turbo Classifier (manufactured by Nisshin Engineering Inc.). Thus, raw material powder having a D50 of 3 µm was obtained. Through the same treatment as in Example 1 except for the above-mentioned procedure, graphite particles C having values for physical properties (BET specific surface area, D50 of the raw material powder, orientation index, Raman value, and d0002) shown in Table 1 were obtained.

A solid electrolyte layer, a negative electrode, and a positive electrode were produced under the same conditions as in Example 1 except that the graphite particles C were used as a negative electrode active material, and a test battery was produced and subjected to the test. The evaluation results of the battery characteristics are shown in Table 1.

### Example 3:

Petroleum-based coke was pulverized with Bantam mill (manufactured by Hosokawa Micron Corporation), and subjected to air classification with Turbo Classifier (manufactured by Nisshin Engineering Inc.). Thus, raw material powder having a D50 of 7 µm was obtained. Through the same treatment as in Example 1 except for the above-mentioned procedure, graphite particles D having values for physical properties shown in Table 1 were obtained.

A solid electrolyte layer, a negative electrode, and a positive electrode were produced under the same conditions as in Example 1 except that the graphite particles D were used as a negative electrode active material, and a test battery was produced and subjected to the test. The evaluation results of the battery characteristics are shown in Table 1.

### Example 4:

Petroleum-based coke was pulverized with Bantam mill (manufactured by Hosokawa Micron Corporation), and subjected to air classification with Turbo Classifier (manufactured by Nisshin Engineering Inc.). Thus, raw material powder having a D50 of 8 µm was obtained. Through the same treatment as in Example 1 except for the above-mentioned procedure, graphite particles E having values for physical properties shown in Table 1 were obtained.

A solid electrolyte layer, a negative electrode, and a positive electrode were produced under the same conditions as in Example 1 except that the graphite particles E were used as a negative electrode active material, and a test battery was produced and subjected to the test. The evaluation results of the battery characteristics are shown in Table 1.

### Example 5:

Graphite particles F having values for physical properties shown in Table 1 were obtained by subjecting the graphite particles A to treatment of applying an impact to a surface for 10 minutes with Mechano Fusion (manufactured by Hosokawa Micron Corporation).

A solid electrolyte layer, a negative electrode, and a positive electrode were produced under the same conditions as in Example 1 except that the graphite particles F were used as a negative electrode active material, and a test battery was produced and subjected to the test. The evaluation results of the battery characteristics are shown in Table 1.

### Example 6:

Graphite particles G having values for physical properties shown in Table 1 were obtained through the same treatment as in Example 5 except that the treatment with Mechano Fusion (manufactured by Hosokawa Micron Corporation) was performed for 60 minutes.

A solid electrolyte layer, a negative electrode, and a positive electrode were produced under the same conditions as in Example 1 except that the graphite particles G were used as a negative electrode active material, and a test battery was produced and subjected to the test. The evaluation results of the battery characteristics are shown in Table 1.

### Example 7:

A negative electrode was produced by the same method as in Example 1 except that 5 parts by mass of Denka Black and 5 parts by mass of vapor grown carbon fiber VGCF (trademark)-H (manufactured by Showa Denko K.K.) were used as a conductive additive. A solid electrolyte layer, the negative electrode, and a positive electrode were produced under the same conditions as in Example 1 except for the above-mentioned procedure, and a test battery was produced and subjected to the test. The evaluation results of the battery characteristics are shown in Table 1.

### Example 8:

A solid electrolyte layer, a negative electrode, and a positive electrode were produced under the same conditions as in Example 1 except that a Li₃PS₄ amorphous solid electrolyte having a D50 of 2 µm obtained by performing the mechanical milling for the solid electrolyte for 40 hours was used, and a test battery was produced and subjected to the test. The evaluation results of the battery characteristics are shown in Table 1.

### Example 9:

A solid electrolyte layer, a negative electrode, and a positive electrode were produced under the same conditions as in Example 1 except that a Li₃PS₄ amorphous solid electrolyte having a D50 of 5 µm obtained by performing the mechanical milling for the solid electrolyte for 30 hours was used, and a test battery was produced and subjected to the test. The evaluation results of the battery characteristics are shown in Table 1.

### Example 10:

A solid electrolyte layer, a negative electrode, and a positive electrode were produced under the same conditions as in Example 1 except that a Li₃PS₄ amorphous solid electrolyte having a D50 of 10 µm obtained by performing the mechanical milling for the solid electrolyte for 12 hours was used, and a test battery was produced and subjected to the test. The evaluation results of the battery characteristics are shown in Table 1.

### Example 11:

Li₂S (manufactured by Nippon Chemical Industrial Co., Ltd.), P₂S₃ (manufactured by Sigma-Aldrich Japan), and P₂S₅ (manufactured by Sigma-Aldrich Japan) each serving as a starting raw material were weighed out and mixed so as to give the above-mentioned composition under an argon atmosphere, and the mixture was subjected to mechanical milling (rotation number: 400 rpm) using a planetary ball mill (P-5 type, manufactured by Fritsch Japan Co., Ltd.) and zirconia balls (7 balls of 10 mmϕ and 10 balls of 3 mmϕ) for 30 hours. Thus, a 75Li₂S·5P₂S₃·20P₂S₅ solid electrolyte having a D50 of 8 µm was obtained. A solid electrolyte layer, a negative electrode, and a positive electrode were produced under the same conditions as in Example 1 except for the above-mentioned procedure, and a test battery was produced and subjected to the test. The evaluation results of the battery characteristics are shown in Table 1.

### Example 12:

A negative electrode was produced by mixing 47.5 parts by mass of the solid electrolyte (Li₃PS₄, D50: 8 µm), 47.5 parts by mass of the negative electrode active material, and 5 parts by mass of Denka Black (trademark) (HS-100). A solid electrolyte layer, the negative electrode, and a positive electrode were produced under the same conditions as in Example 1 except for the above-mentioned procedure, and a test battery was produced and subjected to the test. The evaluation results of the battery characteristics are shown in Table 1.

### Example 13:

A solid electrolyte layer, a negative electrode, and a positive electrode were produced under the same conditions as in Example 1 except that the graphite particles A, which had values for physical properties shown in Table 1 and in which surface carbon was not reduced in crystallinity, were used as a negative electrode active material, and a test battery was produced and subjected to the test. The evaluation results of the battery characteristics are shown in Table 1.

### Example 14:

Petroleum-based coke was pulverized with Bantam mill (manufactured by Hosokawa Micron Corporation), and subjected to air classification with Turbo Classifier (manufactured by Nisshin Engineering Inc.). Thus, raw material powder having a D50 of 10 µm was obtained. Through the same treatment as in Example 1 except for the above-mentioned procedure, graphite particles H having values for physical properties shown in Table 1 were obtained.

A solid electrolyte layer, a negative electrode, and a positive electrode were produced under the same conditions as in Example 1 except that the graphite particles H were used as a negative electrode active material, and a test battery was produced and subjected to the test. The evaluation results of the battery characteristics are shown in Table 1.

### Example 15:

Graphite particles I having values for physical properties shown in Table 1 were obtained through the same treatment as in Example 5 except that the treatment with Mechano Fusion (manufactured by Hosokawa Micron Corporation) was performed for 120 minutes.

A solid electrolyte layer, a negative electrode, and a positive electrode were produced under the same conditions as in Example 1 except that the graphite particles I were used as a negative electrode active material, and a test battery was produced and subjected to the test. The evaluation results of the battery characteristics are shown in Table 1.

### Comparative Example 1:

A solid electrolyte layer, a negative electrode, and a positive electrode were produced under the same conditions as in Example 1 except that a conductive additive was not used for the negative electrode, and a test battery was produced and subjected to the test. The evaluation results of the battery characteristics are shown in Table 1.

### Comparative Example 2:

Petroleum-based coke was pulverized with Bantam mill (manufactured by Hosokawa Micron Corporation), and subjected to air classification with Turbo Classifier (manufactured by Nisshin Engineering Inc.). Thus, raw material powder having a D50 of 20 µm was obtained. Through the same treatment as in Example 1 except for the above-mentioned procedure, graphite particles J having values for physical properties shown in Table 1 were obtained.

A solid electrolyte layer, a negative electrode, and a positive electrode were produced under the same conditions as in Example 1 except that the graphite particles J were used as a negative electrode active material, and a test battery was produced and subjected to the test. The evaluation results of the battery characteristics are shown in Table 1.

### Comparative Example 3:

A solid electrolyte layer, a negative electrode, and a positive electrode were produced under the same conditions as in Example 1 except that artificial graphite powder SFG6 (manufactured by TIMCAL) was used as a negative electrode active material, and a test battery was produced and subjected to the test. The evaluation results of the battery characteristics are shown in Table 1.

### Comparative Example 4:

Petroleum-based coke was pulverized with Bantam mill (manufactured by Hosokawa Micron Corporation), and subjected to air classification with Turbo Classifier (manufactured by Nisshin Engineering Inc.). Thus, raw material powder having a D50 of 5 µm was obtained.

The raw material powder was subjected to heat treatment at 1,300°C for 10 minutes under an argon gas stream in an induction heating furnace, to obtain carbon powder. A solid electrolyte layer, a negative electrode, and a positive electrode were produced under the same conditions as in Example 1 except that the carbon powder was used as a negative electrode active material, and a test battery was produced and subjected to the test. The evaluation results of the battery characteristics are shown in Table 1.

### Comparative Example 5:

A solid electrolyte layer, a negative electrode, and a positive electrode were produced under the same conditions as in Example 1 except that the mechanical milling for the solid electrolyte was performed for 9 hours, and a test battery was produced and subjected to the test. The evaluation results of the battery characteristics are shown in Table 1.

### Comparative Example 6:

A solid electrolyte layer, a negative electrode, and a positive electrode were produced under the same conditions as in Example 1 except that the mechanical milling for the solid electrolyte was performed for 6 hours, and a test battery was produced and subjected to the test. The evaluation results of the battery characteristics are shown in Table 1.

### Comparative Example 7:

A negative electrode was produced by mixing 49 parts by mass of the solid electrolyte (Li₃PS₄, D50: 8 µm), 49 parts by mass of the negative electrode active material, and 2 parts by mass of Denka Black (trademark) (HS-100). A solid electrolyte layer, a negative electrode, and a positive electrode were produced under the same conditions as in Example 1 except for the above-mentioned procedure, and a test battery was produced and subjected to the test. The evaluation results of the battery characteristics are shown in Table 1.

### Comparative Example 8:

Graphite particles K having values for physical properties shown in Table 1 were obtained through the same treatment as in Example 1 except that the graphite particles were obtained by subjecting the raw material powder to heat treatment at 2,500°C for 10 minutes under an argon gas stream in an induction heating furnace.

A solid electrolyte layer, a negative electrode, and a positive electrode were produced under the same conditions as in Example 1 except that the graphite particles K were used as a negative electrode active material, and a test battery was produced and subjected to the test. The evaluation results of the battery characteristics are shown in Table 1.

**Table 1**

| | Negative electrode active material | Values for physical properties of negative electrode active material | | | | | Conductive additive of negative electrode | Solid electrolyte of negative electrode | | Battery characteristics | | |
|---|---|---|---|---|---|---|---|---|---|---|---|---|
| | | BET (m/g) | D50 (µm) | Orientation index | Raman R value | d002 (nm) | | Kind | D50 (µm) | Discharge capacity (mAh/g) | Rate characteristics (%) | Cycle characteristics (%) |
| Example 1 | Graphite particles B | 3 | 5 | 0.4 | 0.2 | 0.3362 | HS-100: 10 parts by mass | Li₃PS₄ | 8 | 40 | 88 | 83 |
| Example 2 | Graphite particles C | 4 | 3 | 0.3 | 0.2 | 0.3362 | HS-100: 10 parts by mass | Li₃PS₄ | 8 | 42 | 89 | 85 |
| Example 3 | Graphite particles D | 2.6 | 7 | 0.6 | 0.2 | 0.3364 | HS-100: 10 parts by mass | Li₃PS₄ | 8 | 40 | 87 | 82 |
| Example 4 | Graphite particles E | 2.2 | 8 | 0.7 | 0.2 | 0.3365 | HS-100: 10 parts by mass | Li₃PS₄ | 8 | 38 | 84 | 80 |
| Example 5 | Graphite particles F | 6 | 5 | 0.4 | 0.24 | 0.3362 | HS-100: 10 parts by mass | Li₃PS₄ | 8 | 41 | 89 | 83 |
| Example 6 | Graphite particles G | 10 | 4 | 0.4 | 0.3 | 0.3362 | HS-100: 10 parts by mass | Li₃PS₄ | 8 | 42 | 90 | 86 |
| Example 7 | Graphite particles B | 3 | 5 | 0.4 | 0.2 | 0.3362 | HS-100: 5 parts by mass VGCF: 5 parts by mass | Li₃PS₄ | 8 | 41 | 94 | 92 |
| Example 8 | Graphite particles B | 3 | 5 | 0.4 | 0.2 | 0.3362 | HS-100: 10 parts by mass | Li₃PS₄ | 2 | 43 | 90 | 86 |
| Example 9 | Graphite particles B | 3 | 5 | 0.4 | 0.2 | 0.3362 | HS-100: 10 parts by mass | Li₃PS₄ | 5 | 42 | 89 | 83 |
| Example 10 | Graphite particles B | 3 | 5 | 0.4 | 0.2 | 0.3362 | HS-100: 10 parts by mass | Li₃PS₄ | 10 | 37 | 84 | 80 |
| Example 11 | Graphite particles B | 3 | 5 | 0.4 | 0.2 | 0.3362 | HS-100: 10 parts by mass | Li₂S·P₂S₃· P₂S₅ | 8 | 40 | 88 | 83 |
| Example 12 | Graphite particles B | 3 | 5 | 0.4 | 0.2 | 0.3362 | HS-100: 5 parts by mass | Li₃PS₄ | 8 | 36 | 81 | 76 |
| Example 13 | Graphite particles A | 4 | 5 | 0.4 | 0.09 | 0.3362 | HS-100: 10 parts by mass | Li₃PS₄ | 8 | 39 | 83 | 71 |
| Example 14 | Graphite particles H | 1.3 | 10 | 0.6 | 0.2 | 0.3367 | HS-100: 10 parts by mass | Li₃PS₄ | 8 | 35 | 76 | 69 |
| Example 15 | Graphite particles I | 15 | 4 | 0.4 | 0.3 | 0.3362 | HS-100: 10 parts by mass | Li₃PS₄ | 8 | 40 | 87 | 70 |
| Comparative Example 1 | Graphite particles B | 3 | 5 | 0.4 | 0.2 | 0.3362 | None | Li₃PS₄ | 8 | 5 | N/A | N/A |
| Comparative Example 2 | Graphite particles J | 1.2 | 20 | 0.7 | 0.2 | 0.3367 | HS-100: 10 parts by mass | Li₃PS₄ | 8 | 30 | 68 | 60 |
| Comparative Example 3 | SFG6 | 6 | 5 | 0.05 | 0.08 | 0.3356 | HS-100: 10 parts by mass | Li₃PS₄ | 8 | 39 | 55 | 62 |
| Comparative Example 4 | Carbon powder | 4 | 5 | N/A | 1.1 | N/A | HS-100: 10 parts by mass | Li₃PS₄ | 8 | 31 | 79 | 67 |
| Comparative Example 5 | Graphite particles B | 3 | 5 | 0.4 | 0.2 | 0.3362 | HS-100: 10 parts by mass | Li₃PS₄ | 12 | 40 | 74 | 69 |
| Comparative Example 6 | Graphite particles B | 3 | 5 | 0.4 | 0.2 | 0.3362 | HS-100: 10 parts by mass | Li₃PS₄ | 20 | 35 | 59 | 56 |
| Comparative Example 7 | Graphite particles B | 3 | 5 | 0.4 | 0.2 | 0.3362 | HS-100: 2 parts by mass | Li₃PS₄ | 8 | 18 | 21 | N/A |
| Comparative Example 8 | Graphite particles K | 4 | 5 | 0.9 | 0.2 | 0.3377 | HS-100: 10 parts by mass | Li₃PS₄ | 8 | 31 | 77 | 75 |

From the results shown in Table 1, it is revealed that the battery of Example 10, in which the solid electrolyte contained in the negative electrode has a D50 of 10 µm, is excellent in rate characteristics and cycle characteristics as compared to the batteries of Comparative Example 5 (D50: 12 µm) and Comparative Example 6 (D50: 20 µm), in each of which the solid electrolyte has a D50 of more than 10 µm.

In addition, it is revealed that the battery of Example 14, in which the negative electrode active material has a D50 of 10 µm, is excellent in discharge capacity, rate characteristics, and cycle characteristics as compared to the battery of Comparative Example 2 (D50: 20 µm), in which the negative electrode active material has a D50 of more than 10 µm.

It is revealed that the battery of Example 1, in which the negative electrode active material has a d002 of 0.3362 nm, is excellent in rate characteristics and cycle characteristics as compared to the battery of Comparative Example 3 (d002: 0.3356 nm), in which the negative electrode active material has a d002 of less than 0.3360 nm. In addition, it is revealed that the battery of Example 14, in which the negative electrode active material has a d002 of 0.3367 nm, is excellent in discharge capacity as compared to the battery of Comparative Example 8 (d002: 0.3377 nm), in which the negative electrode active material has a d002 of more than 0.3370 nm.

Further, it is revealed that the battery of Example 12, in which the amount of the conductive additive contained in the negative electrode is 5 parts by mass per 100 parts by mass of the negative electrode, is excellent in discharge capacity, rate characteristics, and cycle characteristics as compared to the battery of Comparative Example 7, in which the amount of the conductive additive contained in the negative electrode is 2 parts by mass per 100 parts by mass of the negative electrode.

## Claims

1. An all-solid-state lithium ion battery, including a solid electrolyte, a negative electrode, and a positive electrode,
wherein the solid electrolyte is at least one kind selected from the group consisting of oxide-based solid electrolytes and sulfide-based solid electrolytes, and has a 50% diameter (D50) in a cumulative particle diameter distribution on a volume basis of from 0.1 µm to 10 µm,
wherein the negative electrode includes the solid electrolyte, a negative electrode active material, and a conductive additive,
wherein the negative electrode active material includes graphite particles each having an interlayer spacing d002 of a graphite crystal of from 0.3360 nm to 0.3370 nm and having a D50 of from 1 µm to 10 µm, and
wherein the negative electrode includes 35 parts by mass to 45 parts by mass of the negative electrode active material, 45 parts by mass to 55 parts by mass of the solid electrolyte, and 5 parts by mass to 10 parts by mass of the conductive additive.

2. The all-solid-state lithium ion battery according to claim 1, wherein a difference between the D50 of the graphite particles and the D50 of the solid electrolyte is 5 µm or less.

3. The all-solid-state lithium ion battery according to claim 1 or 2, wherein the graphite particles each have a BET specific surface area of from 2 m²/g to 10 m²/g.

4. The all-solid-state lithium ion battery according to any one of claims 1 to 3, wherein surfaces of the graphite particles are coated with low crystalline carbon.

5. The all-solid-state lithium ion battery according to any one of claims 1 to 4, wherein the graphite particles each have an R value (R=I_{D}/I_{G}) of 0.10 or more, which is represented by a ratio between a peak intensity (I_{D}) in a region of from 1,300 cm⁻¹ to 1, 400 cm⁻¹ and a peak intensity (I_{G}) in a region of from 1, 580 cm⁻¹ to 1, 620 cm⁻¹, the peak intensities each being measured by Raman spectroscopy.

6. The all-solid-state lithium ion battery according to any one of claims 1 to 5, wherein the graphite particles each have a ratio of a peak intensity of a (110) plane to a peak intensity of a (004) plane of from 0.2 to 0.8, the peak intensities each being measured by powder X-ray diffractometry.

7. The all-solid-state lithium ion battery according to any one of claims 1 to 6, wherein the solid electrolyte is at least one kind selected from the group consisting of sulfide-based solid electrolytes.

8. The all-solid-state lithium ion battery according to any one of claims 1 to 7, wherein the conductive additive is particulate carbon, fibrous carbon, or a combination thereof.

9. An electrode mixture, including a solid electrolyte, a negative electrode active material, and a conductive additive,
wherein the solid electrolyte is at least one kind selected from the group consisting of oxide-based solid electrolytes and sulfide-based solid electrolytes, and has a 50% diameter (D50) in a cumulative particle diameter distribution on a volume basis of from 0.1 µm to 10 µm,
wherein the negative electrode active material is graphite particles each having an interlayer spacing d002 of a graphite crystal of from 0.3360 nm to 0.3370 nm and having a D50 of from 1 µm to 10 µm, and
wherein the electrode mixture includes 35 parts by mass to 45 parts by mass of the negative electrode active material, 45 parts by mass to 55 parts by mass of the solid electrolyte, and 5 parts by mass to 10 parts by mass of the conductive additive.
